# EUROPEAN PATENT SPECIFICATION

(11) **EP 3 882 924 B1**
(45) Date of publication and mention of the grant of the patent: **16.04.2025**
(21) Application number: 19885951.4
(22) Date of filing: 15.11.2019
(51) Int. Cl.: G21C 17/00, G21D 3/06, G21D 3/04, G21D 3/00

(54) **FAILURE DOWNGRADE RUNNING METHOD AND SYSTEM FOR NUCLEAR POWER PLANT CONTROL ROOM**
BETRIEBSVERFAHREN UND -SYSTEM MIT AUSFALLHERABSTUFUNG FÜR EINEN KERNKRAFTWERKSKONTROLLRAUM
PROCÉDÉ ET SYSTÈME DE FONCTIONNEMENT EN PANNE POUR SALLE DE COMMANDE DE CENTRALE NUCLÉAIRE

(30) Priority: 15.11.2018 CN 201811357968
(43) Date of publication of application: 22.09.2021
(73) Proprietor: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: ZHANG, Gang, Shenzhen, Guangdong 518124 (CN); ZHANG, Xue gang, Shenzhen Guangdong 518124 (CN); CHENG, Bo, Shenzhen Guangdong 518124 (CN); ZOU, Jie, Shenzhen Guangdong 518124 (CN); MEI, Shi bai, Shenzhen Guangdong 518124 (CN); ZHOU, Yi chao, Shenzhen Guangdong 518124 (CN); WANG, Yan, Shenzhen Guangdong 518124 (CN); LIU, Xiao yu, Shenzhen Guangdong 518124 (CN); QIAO, Jian wang, Shenzhen Guangdong 518124 (CN)
(74) Representative: Greaves Brewster LLP
(86) International application number: PCT/CN2019/118758
(87) International publication number: WO 2020/098777

(56) References cited:
- CN-A- 102 142 291
- CN-A- 103 065 694
- CN-A- 103 400 622
- CN-A- 104 485 142
- CN-A- 106 448 778
- CN-A- 106 448 778
- CN-U- 204 215 727
- US-A- 5 361 198
- US-A1- 2005 018 805

## Description

### FIELD OF THE INVENTION

The present invention generally relates to safety instrument and control systems for a nuclear power plant, and more particularly, relates to a failure downgrade operation method and system for a nuclear power plant control room.

### BACKGROUND OF THE INVENTION

At present, in the design of modern nuclear power plant safety instrument and control system, the main control room of a nuclear power plant is mainly equipped with a plant computer information and control system (referred as "KIC") having four digital operator work places (herein referred as "OWP"), and large-scale hardware Back-up Panel (referred as "BUP") and emergency control panel (referred as "ECP").

The conventional failure downgrade operation strategy for a nuclear power plant control room includes: under normal conditions, all functions of Human-System Interfaces (HSIs) are available.

The KIC system belongs to the pre-defense line in the control room defense in depth system. When the KIC system loses one or more OWPs, data network or control network, or in states of server failure, power failure and other failures, the KIC system failure downgrade operation is even not used at all.

BUP+ECP belong to the main defense line and the diversity defense line in the control room defense in depth system. When the KIC system is unavailable, the control authority of the nuclear power plant is transferred to the BUP for monitoring. BUP is mainly used to deal with the failure of non-safety level HSIs system, for accident mitigation, safe shutdown and post-accident monitoring. At the same time, there are some monitoring equipments in the BUP and ECP, which can deal with digital common mode failures such as the failure of the Digital Control System (DCS) protection system.

When the main control room is unavailable due to fire or other factors, the remote shutdown station is put into operation.

A control room monitoring system belonging to the prior art can be found in patent document CN103400622A.

However, the above-mentioned convnetional failure downgrade operation strategy and system for a nuclear power plant control room have the following disadvantages:
1) BUP+ECP belong to the main defense line in the control room defense in depth system to respond to the failure of non-safety level HSIs. Some of the equipments thereof belong to diversity defense to respond to digital common mode failures such as the failure of the DCS protection system. BUP and ECP hardware panels need to deal with the failure of non-safety level HSIs system, but also deal with digital common mode failures, and therefore have two defenses in depth level nuclear power plant monitoring tasks. At the same time, there are a huge number of BUP and ECP hardware panel devices, and devices with different defense in depth levels are mixedly arranged, which makes it difficult to monitor the nuclear power plant.
2) The main control room defense in depth system in the prior art lacks a defense line to alleviate serious accidents.
3) The conventional technology puts forward high requirements on the accuracy of the operation response of the power plant operator in the HSIs failure mode of the control room, which increases the difficulty for the operator to deal with the HSIs failure and the probability of human failure, affects the safety of the power plant. The design of the control room defense in depth system control is prone to design defects.

### SUMMARY OF THE INVENTION

In veiw of the foregoing, the present invention provides a failure downgrade operation method and system for a nuclear power plant control room.

According to one embodiment of the present invention, a failure downgrade operation method for a nuclear power plant control room includes:
using a KIC system to construct a pre-defense line in a control room defense in depth system, wherein in normal conditions, all HSIs functions are available, a plurality of digital work places configured by the KIC system monitor the nuclear power plant; when the KIC system equipment fails, the KIC system redistributes safety monitoring work to the work places, and the KIC system operates in downgrade mode or even fails;
using an Auxiliary Control Panel (ACP) and an ECP to construct a main defense line in the control room defense in depth system, wherein the ACP is configured to replace the KIC system to take over control authority of the nuclear power plant and perform safety monitoring of the nuclear power plant when the KIC system fails;
using a Diverse Human interface Panel (DHP) to construct a diversity defense line in the control room defense in depth system, wherein the DHP panel is configured to independently monitor the nuclear power plant when the DCS protection system of the nuclear power plant fails due to a digital common mode failure; and
using a serious accident panel (SAP) panel to construct a serious accident mitigation line in the control room defense in depth system, wherein the SAP panel is configured to provide operators with relevant serious accident prevention and mitigation means when a serious accident occurs in the nuclear power plant and other safety monitoring methods fail.

According to one aspect of the present invention, when the KIC system equipment fails and the number of work places available is less than minimum configuration requirement, the KIC system is determined as invalid.

According to one aspect of the present invention, the work places of the KIC system includes OWP1 work places for nuclear island operators, OWP2 work places for conventional island operators, and OWP3 work places for nuclear power plant crew chiefs, OWP4 work place for nuclear power plant safety engineers, when the number of work places available in the KIC system is less than 2, the KIC system is determined as invalid.

According to one aspect of the present invention, the ACP includes: a nuclear island operator panel, a conventional island operator panel, and a safety engineer and a supervisor panel.

According to one aspect of the present invention, the SAP is equipped with an independent power source independent from a power supply system of the nuclear power plant.

According to one aspect of the present invention, the ECP is configured to manually shutdown reactor, shutdown machine, and start nuclear power plant system level special safety equipments in emergency situations.

According to one aspect of the present invention, the failure downgrade operation method for a nuclear power plant control room further includes: putting the remote shutdown station into operation and monitoring the safety of the nuclear power plant via a remote control method when the main control room is unavailable.

According to another embodiment of the present invention, a failure downgrade operation system for a nuclear power plant control room includes:
a KIC system, belonging to a pre-defense line in a control room defense in depth system and confitured for safety monitoring of nuclear power plant by a plurality of digital work places configured by the KIC system when all HSIs functions are available under normal conditions, and for redistributing safety monitoring work to the work places in the KIC system when the KIC system equipment fails;
an ACP and a ECP, belonging to the main defense line in the defense in depth system of the control room, ACP being configured to replace the KIC system to take over the control authority of the nuclear power plant and perform safety monitoring of the nuclear power plant when the KIC system fails;
a DHP panel, belonging to diversity defense line in the control room defense in depth system and being configured to independently monitor the nuclear power plant when the DCS protection system of the nuclear power plant fails due to a digital common mode failure; and
a SAP panel, belonging to a serious accident mitigation line in the control room defense in depth system, and being configured to provide operators with relevant serious accident prevention and mitigation methods when a serious accident occurs in the nuclear power plant and other safety monitoring methods fail.

According to one aspect of the present invention, the work places of the KIC system comprises: OWP1 work places for nuclear island operators, OWP2 work places for conventional island operators, and OWP3 work places for nuclear power plant crew chiefs and OWP4 work place for nuclear power plant safety engineers, when the KIC system equipment fails and the number of work places available is less than 2, the KIC system is determined as invalid.

According to one aspect of the present invention, the ACP includes a nuclear island operator panel, a conventional island operator panel, and a safety engineer and supervisor panel.

According to one aspect of the present invention, the SAP is equipped with an independent power source independent from a power supply system of the nuclear power plant.

According to one aspect of the present invention, the ECP is configured to manually perform reactor shutdown, machine shutdown, and start power plant system-level special safety equipment in emergency situations.

The embodiment of the present invention has the following advantages:
The KIC system is used to construct the pre-defense line in a control room defense in depth system. The ACP and ECP are used to construct the main defense line in the control room defense in depth system. The DHP panel is used to construct the diversity defense line in the control room defense in depth system. The SAP panel is used to constuct the serious accident mitigation line in the control room defense in depth system. Therefore, the failure downgrade operation method for a nuclear power plant control room, within the design scope of the control room, considers the positioning of the equipment belonging to the serious accident defense line in the failure downgrade operation strategy, and solves the problem of mixed arrangement of equipment with different defense in depth levels and different failure operation modes. The failure downgrade operation strategy in the control room is clarified, and related special equipment are provided, which can greatly reduce the difficulty for operators to handle HSIs failure, reduce the probability of human failure, and improve the safety of power plants. In addition, it can also be used to guide the design of the main control room system and equipmen, and the design of power plant operation procedures, to reduce design defects.

### BRIEF DESCRIPTION OF THE DRAWINGS

In order to explain the technical solutions in the embodiments of the present invention more clearly, the drawings used in the description of the embodiments will be briefly introduced as following. Obviously, the drawings in the following description only present some embodiments of the present invention. For one ordinary skilled in the art, other drawings can also be obtained based on these drawings without creative work.
Fig. 1 is a flowchart of a failure downgrade operation method for a nuclear power plant control room according to the first embodiment of the present invention;
Fig.2 is an illustative layout diagram of control room equipments according to the first embodiment of the present invention;
Fig. 3 is an illustative diagram of a failure downgrade operation strategy for a nuclear power plant control room according to the first embodiment of the present invention; and
Fig. 4 is an illustative structural diagram of a failure downgrade operation system for a nuclear power plant control room according to the second embodiment of the present invention.

### DETAILED DESCRIPTION OF THE INVENTION

In order to make the objects, technical solutions and advantages of the present invention clear, the embodiments of the present invention will be described in further detail as following in veiw of the accompanying drawings.

### The first Embodiment

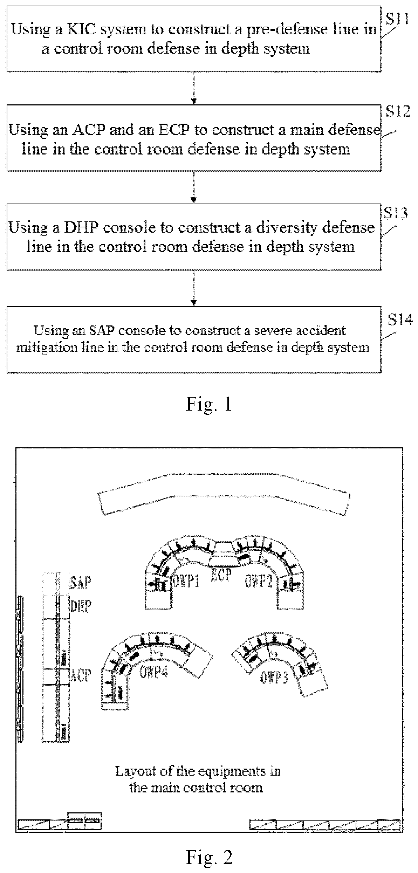

The first embodiment of the present invention provides a failure downgrade operation method for a nuclear power plant control room, which can meet the requirements of defense in depth according to "Basic Safety Principles for Nuclear Power Plants" issued by the International Atomic Energy Agency. Referring to Fig. 1, the failure downgrade operation method for a nuclear power plant control room includes:
Step S11: using a KIC system to construct a pre-defense line in a control room defense in depth system, wherein in normal conditions, all HSIs functions are available, a plurality of digital work places configured by the KIC system monitor the nuclear power plant; when the KIC system equipment fails, the KIC system redistributes safety monitoring work to the work places, and the KIC system operates in downgrade mode or even fails;

The failure of the KIC system equipment includes the loss of one or more of the work place OWPs in the KIC system, the loss of the data network or the control network, the server failure, and the power failure.

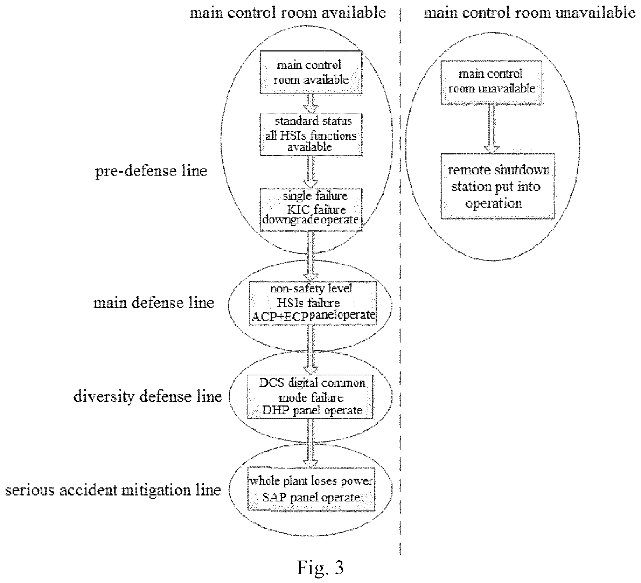

It should be noted that, referring to Fig. 3, under normal conditions, all HSIs functions in the nuclear power plant control room are available. The construction of a defense in depth system for nuclear power plant control rooms will enalbe the control room to carry out corresponding failure downgrade operation strategies in an orderly manner when the control room is faced with different failure modes, so that nuclear power plants will not lose safety monitoring due to HSIs failures and improve the safety of the nuclear power plants.

Specifically, the KIC system is equipped with a number of work places for safety monitoring. When the KIC system equipment failure causes the number of work places available less than the minimum configuration requirement, the KIC system is determined as invalid.

Further, the work places of the KIC system may include: OWP1 work places for nuclear island operators, OWP2 work places for conventional island operators, and OWP3 work places for nuclear power plant crew chiefs, OWP4 work place for nuclear power plant safety engineers, when the number of work places available in the KIC system is less than 2, the KIC system is determined as invalid.

Referring to Fig. 3, in this embodiment, the KIC system belongs to the pre-defense line in the defense in depth system of the control room. All systems in the main control room of the nuclear power plant operate normally, and the KIC system is free from failure. Nuclear island operators at work place OWP1 and conventional island operators at work place OWP2 complete the full-range monitoring of nuclear power plants. The nuclear power plant crew chiefs at the work place OWP3 and the nuclear power plant safety engineer at the work place OWP4 monitor the status of the nuclear power plant.

When the non-safety level KIC system equipment fails, the work places will be reconfigured. If OWP1 is unavailable, nuclear island operators will be transferred to OWP2, and conventional island operators will be transferred to OWP3, to continue to monitor the power plant. The crew chiefs will be transferred to OWP4 and share a work place with the safety engineer. KIC enters the failure downgrade operation stage.

When the available equipment of the KIC system cannot meet the minimum configuration requirements for nuclear power plant monitoring (for example, in a nuclear power plant accident state, less than two OWPs are available), the KIC system is determined as completely unavailable, and the main control room monitoring will rely on the main defense line.

Step S12: using an ACP and an ECP to construct a main defense line in the control room defense in depth system, wherein the ACP is configured to replace the KIC system to take over control authority of the nuclear power plant and perform safety monitoring of the nuclear power plant when the KIC system fails. ECP is used to manually perform reactor shutdown, machine shutdown, and start power plant system-level special safety equipment in emergency situations.

Referring to Fig. 3, in this embodiment, ACP+ECP belongs to the main defense line in the defense in depth system of the control room. When the KIC system is unavailable, the control authority of the nuclear power plant is transferred to ACP for monitoring. ACP is mainly used to deal with the failure of the non-safety level HSIs system, for accident mitigation, safe shutdown and post-accident monitoring.

Optionally, the ACP at least includes a nuclear island operator panel, a conventional island operator panel, and a safety engineer and a supervisor panel.

In this embodiment, the auxiliary control panel ACP is a human-machine interface system with a minimum safety configuration, which can complete the monitoring and control of nuclear power plants through the minimum safety configuration system of ACP when the KIC system fails, so as to meet the requirements of the minimum collection required for safe operation of nuclear power plants. Preferably, the ACP is equipped with three panels, namely, a nuclear island operator panel, a conventional island operator panel, and a safety engineer and a supervisor panel.

The ECP is equipped with system-level operation buttons for emergency actions, such as reactor shutdown, machine shutdown and special safety equipment.

Step S13, using a DHP panel to construct a diversity defense line in the control room defense in depth system, wherein the DHP panel is configured to independently monitor the nuclear power plant when the DCS protection system of the nuclear power plant fails due to a digital common mode failure.

Referring to Fig. 3, in this embodiment, the DHP belongs to the diversity defense line in the defense in depth system of the control room, and can deal with digital common-mode failures such as failure of the DCS protection system. Specifically, software errors in the digital I&C system of nuclear power plants may lead to common mode failure of the software. When a common mode failure occurs in the nuclear power plant reactor protection system and power plant accidents are superimposed at the same time, the control room system must rely on multiple defense means and adopt DHP panels to complete monitoring of the power plant.

In practical applications, the DHP panel mainly provides operators with various switches, indicators more than those of the digital protection system. It also provides monitoring of key safety parameters to alleviate the consequences of design basis accidents.

Step S14: using an SAP panel to construct a serious accident mitigation line in the control room defense in depth system, wherein the SAP panel is configured to provide operators with relevant serious accident prevention and mitigation means when a serious accident occurs in the nuclear power plant and other safety monitoring methods fail.

Referring to Fig. 3, in this embodiment, SAP belongs to serious accident mitigation line in the control room defense in depth system, and can be used to alleviate serious accidents such as power loss in the nuclear power plant. Specifically, when a serious accident and whole plant loses power occur in the power plant, if the normal battery is unavailable and other I&C systems are unavailable, the SAP panel provides operators with relevant serious accident prevention and mitigation means.

Optionally, SAP is equipped with an independent power source independent from the power supply system of the nuclear power plant.

In this embodiment, in the main control room, the SAP panel has a dedicated battery, which is not affected by the availability of other power supply systems, and is powered by a UPS that can last for a certain period of time (such as 12 hours).

In addition, optionally, referring to Fig. 3, when the main control room is unavailable due to fire or other factors, the remote shutdown station can be put into operation, and the remote control method is adopted to monitor the safety of the nuclear power plant.

In this embodiment, the above-mentioned failure downgrade operation method for a nuclear power plant control room matches the level of defense in depth requirements in NUREG-0493 and NUREG CR-6303, and meets the requirements for HSIs failure downgrade operation of IEEE603 and RG 1.97.

Moreover, in the design scope of the control room, the above-mentioned failure downgrade operation method for a nuclear power plant control room, considers the positioning of the equipment that belongs to the serious accident defense line in the failure downgrade operation strategy, and solves the problem of mixed arrangement of equipment with different defense in depth levels and different failure operation modes. The failure downgrade operation strategy in the control room is clarified, and related special equipment are provided, which can greatly reduce the difficulty for operators to handle HSIs failure, reduce the probability of human failure, and improve the safety of power plants. In addition, referring to Fig. 2, it can also be used to guide the design of the main control room system and equipment and the design of power plant operation procedures, to reduce design defects.

According to the embodiment of the present invention, the KIC system is used to construct the pre-defense line in a control room defense in depth system. The ACP and ECP are used to construct the main defense line in the control room defense in depth system. The DHP panel is used to construct the diversity defense line in the control room defense in depth system. The SAP panel is used to constuct the serious accident mitigation line in the control room defense in depth system. Therefore, within the design scope of the control room, the failure downgrade operation method for a nuclear power plant control room considers the positioning of the equipment that belongs to the serious accident defense line in the failure downgrade operation strategy, and solves the problem of mixed arrangement of equipment with different defense in depth levels and different failure operation modes. The failure downgrade operation strategy in the control room is clarified, and related special equipment are provided, which can greatly reduce the difficulty for operators to handle HSIs failure, reduce the probability of human failure, and improve the safety of power plants. **In** addition, it can also be used to guide the design of the main control room system and equipment and the design of power plant operation procedures, to reduce design defects.

### The second embodiment

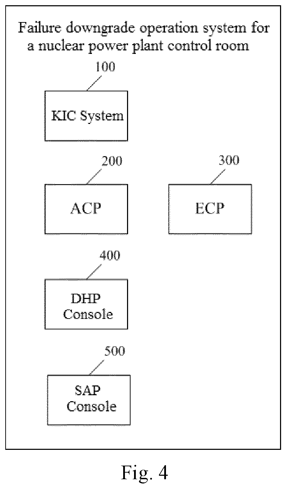

The second embodiment of the present invention provides a failure downgrade operation system for a nuclear power plant control room, to perform the method described in the first embodiment of the present invention. Referring to Fig. 4, the failure downgrade operation system for a nuclear power plant control room includes a KIC system 100, ACP200, ECP300, DHP panel 400, SAP panel 500.

The KIC system 100 belongs to a pre-defense line in a control room defense in depth system. It is used for safety monitoring of nuclear power plants by multiple digital work places of the KIC system when all HSIs functions are available under normal conditions. The KIC system 100 is also used for redistributing safety monitoring work to the work places when the KIC system equipment fails.

It should be noted that, under normal conditions, all HSIs functions in the nuclear power plant control room are available. The construction of a defense in depth system for nuclear power plant control rooms will enable the control room to carry out corresponding failure downgrade operation strategies in an orderly manner when the control room is faced with different failure modes, so that nuclear power plants will not lose safety monitoring due to HSIs failures, so as to improve the safety of nuclear power plants.

ACP200 and ECP300 belong to the main defense line in the defense in depth system of the control room. ACP200 is used to replace the KIC system to take over the control authority of the nuclear power plant and perform safety monitoring of the nuclear power plant when the KIC system fails. ECP is used to manually perform reactor shutdown, machine shutdown, and start power plant system level special safety equipment in emergency situations.

**In** this embodiment, ACP+ECP belong to the main defense line in the defense in depth system of the control room. When the KIC system is unavailable, the control authority of the nuclear power plant is transferred to the ACP for monitoring. ACP is mainly used to deal with the failure of non-safety level HSIs system, for accident mitigation, safe shutdown and post-accident monitoring.

DHP panel 400 is a diversity defense line in the control room defense in depth system. It is used for independent safety monitoring of nuclear power plants when the DCS protection system of nuclear power plants fails due to digital common mode failures.

In this embodiment, the DHP belongs to the diversity defense line in the defense in depth system of the control room, and can deal with digital common mode failures such as failure of the DCS protection system. Specifically, software errors in the digital I&C system of nuclear power plants may lead to common mode failure of the software. When a common mode failure occurs in the nuclear power plant reactor protection system and power plant accidents are superimposed at the same time, the control room system must rely on multiple defense means and adopt DHP panels to complete monitoring of the power plant.

In practical applications, the DHP panel mainly provides operators with various switches, indicators, etc. more than those of the digital protection system. It also provides monitoring of key safety parameters to alleviate the consequences of design basis accidents.

SAP panel 500 belongs to a serious accident mitigation line in the control room defense in depth system. It is used to provide operators with relevant serious accident prevention and mitigation means when a serious accident occurs in a nuclear power plant and other safety monitoring methods fail.

In this embodiment, SAP belongs to the serious accident mitigation line in the control room defense in depth system, and can be used to alleviate serious accidents such as power loss in the entire power plant. Specifically, when a serious accident and the whole plant lose power occurs in the power plant, if the normal battery is unavailable and other I&C systems are unavailable, the SAP panel can provide operators with relevant serious accident prevention and mitigation means.

Specifically, the KIC system is equipped with a number of work places for safety monitoring. When the KIC system equipment fails, causing the number of available work places less than the minimum configuration requirement, the KIC system is determined as invalid.

Further, the work places of the KIC system may include: OWP1 work places for nuclear island operators, OWP2 work places for conventional island operators, OWP3 work places for nuclear power plant crew chiefs, and OWP4 work places for nuclear power plant safety engineers. When the number of work places available is less than 2, the KIC system is determined as invalid.

In this embodiment, the KIC system belongs to the pre-defense line in the defense in depth system of the control room. All systems in the main control room of the nuclear power plant can operate normally, and the KIC system is free from failure. Nuclear island operators at work places OWP1 and conventional island operators at work places OWP2 complete the full-range monitoring of nuclear power plants. The screw chief at the work place OWP3 and the nuclear power plant safety engineer at the work place OWP4 of the nuclear power plant monitor the status of the nuclear power plant.

When the non-safety level KIC system equipment fails, the work places will be reconfigured. If OWP1 is unavailable, nuclear island operators will be transferred to OWP2, and conventional island operators will be transferred to OWP3, to continue to monitor the power plant. The crew chief will be transferred to OWP4 and share a work place with the safety engineers. KIC enters the failure downgrade operation stage.

When the available equipment of the KIC system cannot meet the minimum configuration requirements for nuclear power plant monitoring (for example, in a nuclear power plant accident state, less than two OWPs are available), the KIC system is determined as completely unavailable, and the main control room monitoring will rely on the main defense line.

Optionally, the ACP at least includes a nuclear island operator panel, a conventional island operator panel, and a safety engineer and a supervisor panel.

In this embodiment, the auxiliary control panel ACP is a human-machine interface system with a minimum safety configuration, which can complete the monitoring and control of nuclear power plants through the minimum safety configuration system of ACP when the KIC system fails, so as to meet the requirements of the minimum collection required for safe operation of nuclear power plants. Preferably, the ACP is equipped with three panels, namely, a nuclear island operator panel, a conventional island operator panel, and a safety engineer and crew chief panel.

The ECP is equipped with system-level operation buttons for emergency actions, such as reactor jumping, machine jumping, and special safety equipment.

Optionally, SAP is equipped with an independent power source independent from the power supply system of the nuclear power plant.

In this embodiment, in the main control room, the SAP panel has a dedicated battery, which is not affected by the availability of other power supply systems, and is powered by a UPS that can last for a certain period of time (such as 12 hours).

In addition, optionally, when the main control room is unavailable due to fire or other factors, the remote shutdown station can be put into operation, and the remote control method is adopted to monitor the safety of the nuclear power plant.

**In** this embodiment, the above-mentioned failure downgrade operation method for a nuclear power plant control room matches the level of defense in depth requirements in NUREG-0493 and NUREG CR-6303, and meets the requirements for HSIs failure downgrade operation of IEEE603 and RG 1.97.

Moreover, the above-mentioned failure downgrade operation method for a nuclear power plant control room, in the design scope of the control room, considers the positioning of the equipment that belongs to the serious accident defense line in the failure downgrade operation strategy, and solves the problem of mixed arrangement of equipment with different defense-in-depth levels and different failure operation modes. The failure downgrade operation strategy in the control room is clarified, and related special equipment are provided, which can greatly reduce the difficulty for operators to handle HSIs failure, reduce the probability of human failure, and improve the safety of power plants. In addition, referring to Fig. 2, it can also be used to guide the design of the main control room system and equipment, and the design of power plant operation procedures to reduce design defects.

According to the embodiment of the present invention, the KIC system is used to construct the pre-defense line in a control room defense in depth system. The ACP and ECP are used to construct the main defense line in the control room defense in depth system. The DHP panel is used to construct the diversity defense line in the control room defense in depth system. The SAP panel is used to constuct the serious accident mitigation line in the control room defense in depth system. In this way, the failure downgrade operation method for a nuclear power plant control room, within the design scope of the control room, considers the positioning of the equipment that belongs to the serious accident defense line in the failure downgrade operation strategy, and solves the problem of mixed arrangement of equipment with different defense-in-depth levels and different failure operation modes. The failure downgrade operation strategy in the control room is clarified, and related special equipment are provided, which can greatly reduce the difficulty for operators to handle HSIs failure, reduce the probability of human failure, and improve the safety of power plants. In addition, it can also be used to guide the design of the main control room system and equipment, and the design of power plant operation procedures to reduce design defects.

The sequence numbers of the above-mentioned embodiments of the present invention are only for description, and do not represent the advantages and disadvantages of the embodiments.

It should be noted that, when the failure downgrade operation system for a nuclear power plant control room provided in the above embodiment is used to carry out the failure downgrade operation method for a nuclear power plant control room, the division of the above functional modules is used for illustration only. In actual applications, the function allocation can be completed by different functional modules according to actual needs, that is, the internal structure of the device is divided into different functional modules to complete all or part of the functions described above. In addition, the failure downgrade operation system for a nuclear power plant control room and the failure downgrade operation method for a nuclear power plant control room belong to a same concept. The specific implementation process of failure downgrade operation system for a nuclear power plant control room can be seen in the embodiment of the failure downgrade operation method for a nuclear power plant control room, which will not be repeated here.

One ordinary skilled in the art can understand, all or part of the steps in the above-mentioned embodiments can be completed by hardware, or by a program instruction relevant hardware. The program can be stored in a computer-readable storage medium. The storage medium mentioned can be a read-only memory, a magnetic disk or an optical disk, etc.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments, it should be appreciated that alternative embodiments without departing from the scope of the appended claims. Although specific terms are employed herein, they are used in a generic and descriptive sense only and not for purposes of limitation.

## Claims

1. A failure downgrade operation method for a nuclear power plant control room, the method comprising:
S11: using a plant computer information and control system, referred to as a KIC system (100) to construct a pre-defense line in a control room defense in depth system, wherein in normal conditions, all Human-System Interfaces, HSIs functions are available, a plurality of digital work places configured by the KIC system (100) monitor the nuclear power plant; when the KIC system equipment fails, the KIC system (100) redistributes safety monitoring work to the work places, and the KIC system (100) operates in downgrade mode or even fails;
S12: using an an Auxiliary Control Panel, ACP (200) and an Emergency Control Panel, ECP (300) to construct a main defense line in the control room defense in depth system, wherein the ACP (200) is configured to replace the KIC system (100) to take over control authority of the nuclear power plant and perform safety monitoring of the nuclear power plant when the KIC system (100) fails;
S13: using a Serious Accident Panel, SAP panel (500) to construct a diversity defense line in the control room defense in depth system, wherein the SAP panel (500) is configured to independently monitor the nuclear power plant when the Digital Control System, DCS protection system of the nuclear power plant fails due to a digital common mode failure; and
S14: using an SAP panel (500) to construct a serious accident mitigation line in the control room defense in depth system, wherein the SAP panel (500) is configured to provide operators with relevant serious accident prevention and mitigation means when a serious accident occurs in the nuclear power plant and other safety monitoring methods fail.

2. The method according to claim 1, **characterized in that** when the KIC system equipment fails and the number of work places available is less than minimum configuration requirement, the KIC system (100) is determined as invalid.

3. The method according to claim 2, **characterized in that** the work places of the KIC system (100) comprises OWP1 work places for nuclear island operators, OWP2 work places for conventional island operators, and OWP3 work places for nuclear power plant crew chiefs, OWP4 work place for nuclear power plant safety engineers, when the number of work places available in the KIC system (100) is less than 2, the KIC system (100) is determined as invalid.

4. The method according to claim 1, **characterized in that** the ACP (200) comprises: a nuclear island operator panel, a conventional island operator panel, and a safety engineer and a supervisor panel.

5. The method of claim 1, **characterized in that** the SAP is equipped with an independent power source independent from a power supply system of the nuclear power plant.

6. The method according to claim 1, **characterized in that** the ECP (300) is configured to manually perform reactor shutdown, machine shutdown, and start nuclear power plant system level special safety equipments in emergency situations.

7. The method according to claim 1, **characterized in that** the method further comprising: putting the remote shutdown station into operation and monitoring the safety of the nuclear power plant via a remote control method when the main control room is unavailable.

8. A failure downgrade operation system for a nuclear power plant control room, the system comprising:
a KIC system (100), belonging to a pre-defense line in a control room defense in depth system and confitured for safety monitoring of nuclear power plant by a plurality of digital work places configured by the KIC system (100) when all HSIs functions are available under normal conditions, and for redistributing safety monitoring work to the work places in the KIC system (100) when the KIC system equipment fails;
an ACP (200) and a ECP (300), belonging to the main defense line in the defense in depth system of the control room, ACP (200) being configured to replace the KIC system (100) to take over the control authority of the nuclear power plant and perform safety monitoring of the nuclear power plant when the KIC system (100) fails;
a DHP panel (400), belonging to diversity defense line in the control room defense in depth system and being configured to independently monitor the nuclear power plant when the DCS protection system of the nuclear power plant fails due to a digital common mode failure; and
a SAP panel (500), belonging to a serious accident mitigation line in the control room defense in depth system, and being configured to provide operators with relevant serious accident prevention and mitigation methods when a serious accident occurs in the nuclear power plant and other safety monitoring methods fail.

9. The system according to claim 8, **characterized in that** the work places of the KIC system (100) comprises: OWP1 work places for nuclear island operators, OWP2 work places for conventional island operators, and OWP3 work places for nuclear power plant crew chiefs and OWP4 work place for nuclear power plant safety engineers, when the KIC system equipment fails and the number of work places available is less than 2, the KIC system (100) is determined as invalid.

10. The system according to claim 8, **characterized in that** the ACP (200) comprises: a nuclear island operator panel, a conventional island operator panel, and a safety engineer and supervisor panel.

11. The system of claim 8, **characterized in that** the SAP is equipped with an independent power source independent from a power supply system of the nuclear power plant.

12. The system according to claim 8, **characterized in that** the ECP (300) is configured to manually perform reactor shutdown, machine shutdown, and start power plant system-level special safety equipment in emergency situations.

## Patentansprüche

1. Bedienverfahren mit Ausfallherabstufung für einen Kernkraftwerkskontrollraum, wobei das Verfahren Folgendes umfasst:
S11: Verwenden eines Werkscomputerinformations- und Kontrollsystems, das als KIC-System (100) bezeichnet wird, um eine Vorverteidigungslinie in einem Kontrollraumtiefenverteidigungssystem zu konstruieren, wobei unter normalen Bedingungen alle Mensch-System-Schnittstellen-, HSIS-Funktionen verfügbar sind, eine Vielzahl von digitalen Arbeitsplätzen, die durch das KIC-System (100) konfiguriert ist, das Kernkraftwerk überwacht; wenn die KIC-Systemausrüstung ausfällt, das KIC-System (100) Sicherheitsüberwachungsarbeit auf die Arbeitsplätze umverteilt, und das KIC-System (100) in Herabstufungsmodus arbeitet oder sogar ausfällt;
S12: Verwenden eines Hilfskontrollpanels, ACP (200) und eines Notfallkontrollpanels, ECP (300), um eine Hauptverteidigungslinie in dem Kontrollraumtiefenverteidigungssystem zu konstruieren, wobei das ACP (200) konfiguriert ist, um das KIC-System (100) zu ersetzen, um Kontrollbefugnis des Kernkraftwerks zu übernehmen und Sicherheitsüberwachung des Kernkraftwerks durchzuführen, wenn das KIC-System (100) ausfällt;
S13: Verwenden eines Panels für schwere Unfälle, SAP-Panel (500), um eine Diversitätsverteidigungslinie in dem Kontrollraumtiefenverteidigungsystem zu konstruieren, wobei das SAP-Panel (500) konfiguriert ist, um das Kernkraftwerk unabhängig zu überwachen, wenn das digitale Kontrollsystem-, DCS-Schutzsystem des Kernkraftwerks aufgrund eines digitalen Gleichtaktausfalls ausfällt; und
S14: Verwenden eines SAP-Panels (500), um eine Abschwächungslinie für schwere Unfälle in dem Kontrollraumtiefenverteidigungssystem zu konstruieren, wobei das SAP-Panel (500) konfiguriert ist, um Bedienern relevante Mittel zur Verhinderung und Abschwächung von schweren Unfällen bereitzustellen, wenn ein schwerer Unfall in dem Kernkraftwerk auftritt und andere Sicherheitsüberwachungsverfahren ausfallen.

2. Verfahren nach Anspruch 1, **dadurch gekennzeichnet, dass**, wenn die KIC-Systemausrüstung ausfällt und die Anzahl an verfügbaren Arbeitsplätzen weniger als Mindestkonfigurationsanforderung ist, das KIC-System (100) als ungültig bestimmt wird.

3. Verfahren nach Anspruch 2, **dadurch gekennzeichnet, dass** die Arbeitsplätze des KIC-Systems (100) OWP1-Arbeitsplätze für Bediener einer nuklearen Insel, OWP2-Arbeitsplätze für Bediener einer konventionellen Insel und OWP3-Arbeitsplätze für Kernkraftwerk-Crewchefs, OWP4-Arbeitsplätze für Kernkraftwerkssicherheitsingenieure umfassen, wobei, wenn die Anzahl an verfügbaren Arbeitsplätzen in dem KIC-System (100) weniger als 2 ist, das KIC-System (100) als ungültig bestimmt ist.

4. Verfahren nach Anspruch 1, **dadurch gekennzeichnet, dass** das ACP (200) Folgendes umfasst: ein Panel für Bediener einer nuklearen Insel, ein Panel für Bediener einer konventionellen Insel und ein Panel für Sicherheitsingenieure und Supervisor.

5. Verfahren nach Anspruch 1, **dadurch gekennzeichnet, dass** das SAP mit einer unabhängigen Stromquelle unabhängig von einem Stromversorgungssystem des Kernkraftwerks ausgestattet ist.

6. Verfahren nach Anspruch 1, **dadurch gekennzeichnet, dass** das ECP (300) konfiguriert ist, um manuell Reaktorabschaltung, Maschinenabschaltung durchzuführen und spezielle Sicherheitsausrüstungen auf Kernkraftwerksystemebene in Notfallsituationen zu starten.

7. Verfahren nach Anspruch 1, **dadurch gekennzeichnet, dass** das Verfahren ferner Folgendes umfasst: Inbetriebsetzen der Fernabschaltstation und Überwachen der Sicherheit des Kernkraftwerks über ein Fernkontrollverfahren, wenn der Hauptkontrollraum nicht verfügbar ist.

8. Betriebssystem mit Ausfallherabstufung für einen Kernkraftwerkskontrollraum, wobei das System Folgendes umfasst:
ein KIC-System (100), das zu einer Vorverteidigungslinie in einem Kontrollraumtiefenverteidigungssystem gehört und für Sicherheitsüberwachung des Kernkraftwerks durch eine Vielzahl von digitalen Arbeitsplätzen, die durch das KIC-System (100) konfiguriert ist, wenn alle HSIS-Funktionen unter normalen Bedingungen verfügbar sind, und für Umverteilen von Sicherheitsüberwachungsarbeit auf die Arbeitsplätze in dem KIC-System (100), wenn die KIC-Systemausrüstung ausfällt, konfiguriert ist;
ein ACP (200) und ein ECP (300), die zu der Hauptverteidigungslinie in dem Tiefenverteidigungssystem des Kontrollraums gehören, wobei das ACP (200) konfiguriert ist, um das KIC-System (100) zu ersetzen, um die Kontrollbefugnis des Kernkraftwerks zu übernehmen und Sicherheitsüberwachung des Kernkraftwerks durchzuführen, wenn das KIC-System (100) ausfällt;
ein DHP-Panel (400), das zu einer Diversitätsverteidigungslinie in dem Kontrollraumtiefenverteidigungssystem gehört und konfiguriert ist, um das Kernkraftwerk unabhängig zu überwachen, wenn das DCS-Schutzsystem des Kernkraftwerks aufgrund eines digitalen Gleichtaktfehlers ausfällt; und
ein SAP-Panel (500), das zu einer Abschwächungslinie für schwere Unfälle in dem Kontrollraumtiefenverteidigungssystem gehört und konfiguriert ist, um Bedienern relevante Verfahren zur Verhinderung und Abschwächung von schweren Unfällen bereitzustellen, wenn ein schwerer Unfall in dem Kernkraftwerk auftritt und andere Sicherheitsüberwachungsverfahren ausfallen.

9. System nach Anspruch 8, **dadurch gekennzeichnet, dass** die Arbeitsplätze des KIC-Systems (100) Folgendes umfassen: OWP1-Arbeitsplätze für Bediener einer nuklearen Insel, OWP2-Arbeitsplätze für Bediener einer konventionellen Insel und OWP3-Arbeitsplätze für Kernkraftwerk-Crewchefs und OWP4-Arbeitsplätze für Kernkraftwerkssicherheitsingenieure, wobei, wenn die KIC-Systemausrüstung ausfällt und die Anzahl an verfügbaren Arbeitsplätzen weniger als 2 ist, das KIC-System (100) als ungültig bestimmt wird.

10. System nach Anspruch 8, **dadurch gekennzeichnet, dass** das ACP (200) Folgendes umfasst: ein Panel für Bediener einer nuklearen Insel, ein Panel für Bediener einer konventionellen Insel und ein Panel für Sicherheitsingenieure und Supervisor.

11. System nach Anspruch 8, **dadurch gekennzeichnet, dass** das SAP mit einer unabhängigen Stromquelle unabhängig von einem Stromversorgungssystem des Kernkraftwerks ausgestattet ist.

12. System nach Anspruch 8, **dadurch gekennzeichnet, dass** das ECP (300) konfiguriert ist, um manuell Reaktorabschaltung, Maschinenabschaltung durchzuführen und spezielle Sicherheitsausrüstungen auf Kernkraftwerksystemebene in Notfallsituationen zu starten.

## Revendications

1. Procédé de fonctionnement en panne pour une salle de commande de centrale nucléaire, le procédé comprenant :
S11 : utilisation d'un système informatique de conduite de centrale, appelé système KIC (100) pour construire une ligne de pré-défense dans un système de défense en profondeur de salle de commande, dans lequel, dans des conditions normales, toutes les fonctions d'interfaces homme-système, HSI, sont disponibles, une pluralité de postes de travail numériques configurés par le système KIC (100) surveillent la centrale nucléaire ; lorsque l'équipement du système KIC devient défaillant, le système KIC (100) redistribue le travail de surveillance de la sûreté aux postes de travail, et le système KIC (100) fonctionne en mode de panne, voire devient défaillant ;
S12 : utilisation d'un panneau de commande auxiliaire, ACP (200) et d'un panneau de commande d'urgence, ECP (300) pour construire une ligne de défense principale dans le système de défense en profondeur de la salle de commande, l'ACP (200) étant configuré pour remplacer le système KIC (100) afin de prendre en charge l'autorité de commande de la centrale nucléaire et d'effectuer une surveillance de la sûreté de la centrale nucléaire lorsque le système KIC (100) devient défaillant ;
S13 : utilisation d'un panneau d'accident grave, panneau SAP, (500) pour construire une ligne de défense en diversité dans le système de défense en profondeur de la salle de commande, dans lequel le panneau SAP (500) est configuré pour surveiller indépendamment la centrale nucléaire lorsque le système de protection du système de commande numérique, DCS, de la centrale nucléaire devient défaillant en raison d'une défaillance de mode commun numérique ; et
S14 : utilisation d'un panneau SAP (500) pour construire une ligne d'atténuation des accidents graves dans le système de défense en profondeur de la salle de commande, dans lequel le panneau SAP (500) est configuré pour fournir aux opérateurs des moyens pertinents de prévention et d'atténuation des accidents graves lorsqu'un accident grave se produit dans la centrale nucléaire et que d'autres méthodes de surveillance de la sûreté échouent.

2. Procédé selon la revendication 1, **caractérisé en ce que** lorsque l'équipement du système KIC est défaillant et que le nombre de postes de travail disponibles est inférieur à l'exigence de configuration minimale, le système KIC (100) est déterminé comme étant invalide.

3. Procédé selon la revendication 2, **caractérisé en ce que** les postes de travail du système KIC (100) comprennent des postes de travail OWP1 pour les opérateurs d'îlots nucléaires, des postes de travail OWP2 pour les opérateurs d'îlots conventionnels, et des postes de travail OWP3 pour les chefs d'équipe de centrale nucléaire, des postes de travail OWP4 pour les ingénieurs de sûreté de centrale nucléaire, lorsque le nombre de postes de travail disponibles dans le système KIC (100) est inférieur à 2, le système KIC (100) est déterminé comme étant invalide.

4. Procédé selon la revendication 1, **caractérisé en ce que** l'ACP (200) comprend : un panneau d'opérateur d'îlot nucléaire, un panneau d'opérateur d'îlot conventionnel, et un panneau d'ingénieur et de superviseur de sûreté.

5. Procédé selon la revendication 1, **caractérisé en ce que** le SAP est équipé d'une source d'alimentation indépendante d'un système d'alimentation électrique de la centrale nucléaire.

6. Procédé selon la revendication 1, **caractérisé en ce que** l'ECP (300) est configuré pour effectuer manuellement l'arrêt du réacteur, l'arrêt des machines et le démarrage des équipements de sûreté spéciaux au niveau du système de la centrale nucléaire dans des situations d'urgence.

7. Procédé selon la revendication 1, **caractérisé en ce que** le procédé comprend en outre : la mise en service de la station d'arrêt à distance et la surveillance de la sûreté de la centrale nucléaire via un procédé de commande à distance lorsque la salle de commande principale n'est pas disponible.

8. Système de fonctionnement en panne pour une salle de commande de centrale nucléaire, le système comprenant :
un système KIC (100), appartenant à une ligne de pré-défense dans un système de défense en profondeur de salle de commande et conçu pour la surveillance de la sûreté de la centrale nucléaire par une pluralité de postes de travail numériques configurés par le système KIC (100) lorsque toutes les fonctions HSI sont disponibles dans des conditions normales, et pour redistribuer le travail de surveillance de la sûreté aux postes de travail dans le système KIC (100) lorsque l'équipement du système KIC devient défaillant ;
un ACP (200) et un ECP (300), appartenant à la ligne de défense principale dans le système de défense en profondeur de la salle de commande, l'ACP (200) étant configuré pour remplacer le système KIC (100) afin de prendre en charge l'autorité de commande de la centrale nucléaire et d'effectuer une surveillance de la sûreté de la centrale nucléaire lorsque le système KIC (100) devient défaillant ;
un panneau DHP (400), appartenant à la ligne de défense en diversité dans le système de défense en profondeur de la salle de commande et étant configuré pour surveiller indépendamment la centrale nucléaire lorsque le système de protection DCS de la centrale nucléaire devient défaillant en raison d'une défaillance de mode commun numérique ; et
un panneau SAP (500), appartenant à une ligne d'atténuation des accidents graves dans le système de défense en profondeur de la salle de commande, et étant configuré pour fournir aux opérateurs des méthodes pertinentes de prévention et d'atténuation des accidents graves lorsqu'un accident grave se produit dans la centrale nucléaire et que d'autres méthodes de surveillance de la sûreté échouent.

9. Système selon la revendication 8, **caractérisé en ce que** les postes de travail du système KIC (100) comprennent : des postes de travail OWP1 pour les opérateurs d'îlots nucléaires, des postes de travail OWP2 pour les opérateurs d'îlots conventionnels, et des postes de travail OWP3 pour les chefs d'équipe de centrale nucléaire et des postes de travail OWP4 pour les ingénieurs de sûreté de centrale nucléaire, lorsque l'équipement du système KIC est défaillant et que le nombre de postes de travail disponibles est inférieur à 2, le système KIC (100) est déterminé comme étant invalide.

10. Système selon la revendication 8, **caractérisé en ce que** l'ACP (200) comprend : un panneau d'opérateur d'îlot nucléaire, un panneau d'opérateur d'îlot conventionnel, et un panneau d'ingénieur et de superviseur de sûreté.

11. Système selon la revendication 8, **caractérisé en ce que** le SAP est équipé d'une source d'alimentation indépendante d'un système d'alimentation électrique de la centrale nucléaire.

12. Système selon la revendication 8, **caractérisé en ce que** l'ECP (300) est configuré pour effectuer manuellement l'arrêt du réacteur, l'arrêt des machines et le démarrage des équipements de sûreté spéciaux au niveau du système de la centrale nucléaire dans des situations d'urgence.
